# EUROPEAN PATENT SPECIFICATION

(11) **EP 3 344 903 B1**
(45) Date of publication and mention of the grant of the patent: **25.09.2019**
(21) Application number: 16766239.4
(22) Date of filing: 30.08.2016
(51) Int. Cl.: F16K 11/085, F16K 11/074, F16K 37/00, B01L 3/00, G01N 35/10, G01N 1/14

(54) **ROTARY VALVE AND PUMP SYSTEM WITH ROTARY VALVE**
PUMPENSYSTEM MIT DREHVENTIL
SYSTÈME DE POMPE AVEC SOUPAPE ROTATIVE

(30) Priority: 31.08.2015 EP 15183189; 31.08.2015 EP 15183190; 24.03.2016 EP 16162433
(43) Date of publication of application: 11.07.2018
(73) Proprietor: bNovate Technologies SA, 1024 Ecubiens (VD) (CH)
(72) Inventor: KUENZI, Simon, 1003 Lausanne (CH)
(74) Representative: reuteler & cie SA
(86) International application number: PCT/EP2016/070431
(87) International publication number: WO 2017/037072

(56) References cited:
- EP-A1- 1 859 716
- DE-A1- 10 323 661
- DE-U1-202004 002 938
- US-A- 4 428 511
- US-A- 6 098 646
- US-A1- 2004 039 346
- US-A1- 2004 082 904
- US-A1- 2005 037 517
- US-A1- 2005 264 283
- US-A1- 2009 039 872
- US-A1- 2010 305 508
- US-A1- 2011 071 390
- US-A1- 2014 042 349
- US-A1- 2014 151 589
- US-B1- 6 852 291

## Description

The present invention relates to a rotary valve with selectable positions for input and output of fluids, and to a pump system with a rotary valve. For specific applications, the invention also relates to a microfluidic pump system and to a system for biological or chemical sample measurement and/or preparation incorporating a microfluidic pump system. According to a particular application, the invention also relates to a flow cytometer incorporating a pump system with rotary valve.

Rotary valves may be used with piston or syringe pump systems that are used to draw in a liquid in a pump chamber from a liquid supply and subsequently expel the liquid through an outlet. In such systems, there may be a plurality of inlets connected to a plurality of liquid supplies comprising different liquids, for delivery to one or more outlets that feed into one or more delivery systems. Various applications may benefit from such sequential delivery of different liquids depending on the processes to be accomplished, for instance in biological or medical diagnostics applications. In such applications, it is common to use syringe pumps for accurate dosage. Other microfluidic applications also benefit from pumps with selectable rotary valve arrangements.

US20040082904 and US6852291 disclose examples of pump systems with a rotary valve.

One of the drawbacks in conventional syringe pump arrangements for microfluidic liquid delivery is the loss of liquid to waste when changing liquids due to the need to wash through the residual volume of liquid in the inlets and outlets within the pump and valve. A further drawback of conventional systems is the difficulty of removing all air within the pump and valve that may be trapped in dead volume zones within the pump and valve. Certain types of pumps, such as peristaltic pumps do not suffer from these drawbacks, however are not well adapted or convenient for accurate pumping, in particular microfluidic pumping and moreover are not well adapted for valve systems with selectable input and output channels.

In view of the foregoing, it is an object of this invention to provide a rotary valve, which allows accurate delivery of liquids and minimal waste.

It is also an object of this invention to provide a pump system, which allows accurate delivery of liquids and minimal waste.

A pump system and rotary valve may in particular be advantageously used in microfluidic applications for biological or chemical sample measurement and/or preparation.

A particular application that may advantageously incorporate a pump system and rotary valve according to the invention is an automated flow cytometer.

It is advantageous to provide a pump system and rotary valve that allows to effectively evacuate air within the system in a reliable manner.

It is advantageous to provide a pump system and rotary valve that is cost effective and easy to operate.

It is advantageous to provide a pump system and rotary valve that is compact, robust and reliable.

It is advantageous to provide a pump system and rotary valve that is cost effective to manufacture and assemble.

It is advantageous to provide a pump system and rotary valve that is easy to use.

Disclosed herein is a pump system with rotary valve comprising a pump and a valve. The valve includes a stator comprising a stator body and a plurality of stator fluid channels connected to fluid ports coupled to respective fluid supply and delivery lines, and a rotor comprising a rotor body and at least one rotor fluid channel.

The stator body comprises a valve bearing surface and the rotor body comprises a complementary valve bearing surface slidably engaging the stator valve bearing surface. The rotor fluid channels are configured to be brought into fluid communication with stator fluid channels as a function of the relative angular position of the rotor with respect of the stator about a rotor axis A. The rotor fluid channels comprise at least one rotor input fluid channel having an input end at said bearing surface of the rotor and an output end in fluid communication with a pump chamber of the pump, and at least one rotor output fluid channel distinct from the rotor input fluid channel and having an input end in fluid communication with said pump chamber and an output end at said valve bearing surface of the rotor body. The rotor input fluid channel is configured for fluid communication with at least a first of said stator fluid channels at a first relative angular position of the rotor with respect to the stator, and the rotor output fluid channel is configured for fluid communication with at least a second of said stator fluid channels at a second relative angular position of the rotor with respect to the stator, the second relative angular position being different from the first relative angular position.

In a first embodiment, the stator has a conical or cylindrical valve bearing surface and the rotor has a complementary conical or cylindrical valve bearing surface.

In a second embodiment, the rotor valve bearing surface and stator valve bearing surface form a thrust bearing. In this embodiment, the rotor fluid channels may comprise grooves on the rotor bearing surface.

According to the claimed invention, the output end of the rotor input fluid channel and the input end of the rotor output fluid channel are at an axial end face of the rotor that bounds or is positioned proximate the pump chamber.

In an advantageous embodiment, the end face of the rotor bounds an end of the pump chamber. In another embodiment, the end face of the rotor is separated from the pump chamber by a stator wall portion.

In an advantageous embodiment, the distinct and separate rotor input fluid channel and rotor output fluid channel extend to the pump chamber end face of the rotor.

In an advantageous embodiment, the stator comprises fluid ports mounted on the stator body for connection to fluid supply lines or fluid delivery lines that may include a fluid waste line.

In an advantageous embodiment, the fluid ports are arranged in a distributed spaced apart manner around the stator body configured for feeding liquid into respective stator fluid channels in the stator body.

In an embodiment, at least one stator fluid channel is at a different axial height to at least one other stator fluid channel.

In an embodiment, the positions of the input and output ends of the various stator and rotor fluid channels are configured such that each rotor fluid channel is in communication with only one stator fluid channel over a 360° rotation of the rotor.

In an advantageous embodiment, the one or more of the fluid channels of the rotor are, over a 360° rotation of the rotor relative to the stator, in fluid communication with two or more stator fluid channels.

According to the claimed invention, the rotary valve further comprises a position sensing system. The position sensing system comprises a position detector mounted in the stator and complementary sensor position markers mounted in the rotor configured to provide a plurality of discrete detectable positions spaced around the rotor at angular spacings that correspond to angular spacings between the ends of the stator fluid channels that are positioned at the stator valve bearing surface.

In an advantageous embodiment, the discrete detectable positions are provided by discrete sensor position markers mounted around a circumference of the rotor.

In an advantageous embodiment, the discrete sensor position markers may be mounted in a disc portion of the rotor.

In an advantageous embodiment, at least one of the sensor position markers is configured to provide a signal that is different from the signals produced by the other sensor position markers when detected by the detector to enable determining the absolute position of the rotor from at least one reference position.

In an advantageous embodiment, the sensor position markers comprise discrete magnets mounted on or in the rotor at said angularly spaced positions corresponding to the stator fluid channel ends on the stator valve bearing surface.

In an advantageous embodiment, the sensor position markers may be axially aligned with said stator fluid channel ends on the stator valve bearing surface.

In an advantageous embodiment, the detector comprises a magnetic field sensor.

In an advantageous embodiment, the detector comprises a pair of magnetic field sensors mounted at slightly spaced apart positions configured to enable both the direction of rotation of the rotor as well as the relative angle of the rotor with respect to the stator to be detected accurately.

In an advantageous embodiment, the magnetic field sensor is a Hall effect sensor.

In an advantageous embodiment, sensing surfaces of the pair of sensors are arranged in the stator axially above or below the rotor position markers at a small airgap with respect to the rotor such that the direction of rotation of the rotor as well as the relative angle of the rotor with respect to the stator can be detected accurately.

In an advantageous embodiment, the position marker magnet has a magnetic orientation of opposed polarity to the polarity of the other magnets such that it forms the signal for a reference position.

In an embodiment, the position detector may be mounted on a portion of the stator that forms part of the valve body. In an advantageous variant, the position detector may be mounted on a portion of the stator coupled to, or forming part of a housing or support structure, the valve body being removably assembled to the stator portion.

According to an aspect of the invention, the pump system with rotary valve is a microfluidic pump system configured to pump and dispense liquids in volumes ranging between 0.1 µL and 10000 µL per pump cycle, preferably between 1 and 1000 µL per pump cycle.

The microfluidic pump system may in particular be configured for biological or chemical sample measurement or preparation.

Also disclosed herein, according to an aspect of the invention, is an automated flow cytometer comprising a pump system with rotary valve as described herein, further comprising a microfluidic mixing device connected to the rotary valve.

The flow cytometer may further comprise a sample analyzer with sample detectors and processing circuitry and software, connected to the pump system with rotary valve.

The flow cytometer, according to an embodiment, may further comprise reagents and cleaning liquids provided in one or more replaceable or removable cartridges connected to ports of the rotary valve.

Also disclosed herein according to an aspect of the invention, is a rotary valve for a pump system, including a position sensing system, a stator comprising a stator body and a plurality of stator fluid channels connected to fluid ports coupled to respective fluid supply and delivery lines, and a rotor comprising a rotor body and at least one rotor fluid channel, the stator body comprising a valve bearing surface and the rotor body comprising a complementary valve bearing surface slidably engaging the stator valve bearing surface. The rotor fluid channel is configured to be brought into fluid communication with stator fluid channels as a function of the relative angular position of the rotor with respect of the stator about a rotor axis A. Each stator fluid channel comprises an end at said stator body valve bearing surface. The position sensing system comprises a position detector mounted in the stator and complementary discrete sensor position markers mounted in a disc portion of the rotor adjacent the valve bearing surface portion of the rotor, the discrete sensor position markers positioned around the circumference of the rotor and configured to provide a plurality of discrete detectable positions spaced around the rotor at angular spacings that correspond to angular spacings between the ends of the stator fluid channels that are positioned at the stator valve bearing surface. The position detector is mounted on a portion of the stator coupled to, or forming part of, a housing or support structure, the stator portion being removably assembled to the valve body.

In an advantageous embodiment, at least one of the sensor position markers is configured to provide a signal that is different from the signals produced by the other sensor position markers when detected by the detector to enable determining the absolute position of the rotor from at least one reference position.

In an advantageous embodiment, the sensor position markers comprise discrete magnets mounted on or in the rotor at said angularly spaced positions corresponding to the stator fluid channel ends on the stator valve bearing surface.

In an advantageous embodiment, the sensor position markers are axially aligned with said stator fluid channel ends on the stator valve bearing surface.

In an advantageous embodiment, the detector comprises a magnetic field sensor.

In an advantageous embodiment, the detector comprises a pair of magnetic field sensors mounted at slightly spaced apart positions configured to enable both the direction of rotation of the rotor as well as the relative angle of the rotor with respect to the stator to be detected accurately.

In an advantageous embodiment, the magnetic field sensor is a Hall effect sensor.

In an advantageous embodiment, sensing surfaces of the pair of sensors are arranged in the stator axially above or below the rotor position markers at a small air gap with respect to the rotor such that the direction of rotation of the rotor as well as the relative angle of the rotor with respect to the stator can be detected accurately.

In an advantageous embodiment, one of the position marker magnets has a magnetic orientation of opposed polarity to the polarity of the other magnets such that it forms the signal for a reference position.

Also disclosed herein according to an aspect of the invention is a pump system with rotary valve comprising a pump, and a rotary valve as described above, wherein the rotor fluid channels comprise at least one rotor input fluid channel having an input end at said bearing surface of the rotor and an output end in fluid communication with a pump chamber of the pump, and at least one rotor output fluid channel distinct from the rotor input fluid channel and having an input end in fluid communication with said pump chamber and an output end at said valve bearing surface of the rotor body. The rotor input fluid channel is configured for fluid communication with at least a first of said stator fluid channels at a first relative angular position of the rotor with respect to the stator, and the rotor output fluid channel configured for fluid communication with at least a second of said stator fluid channels at a second relative angular position of the rotor with respect to the stator, the second relative angular position being different from the first relative angular position.

Further objects and advantageous features of the invention will be apparent from the claims, from the detailed description, and annexed drawings, in which:

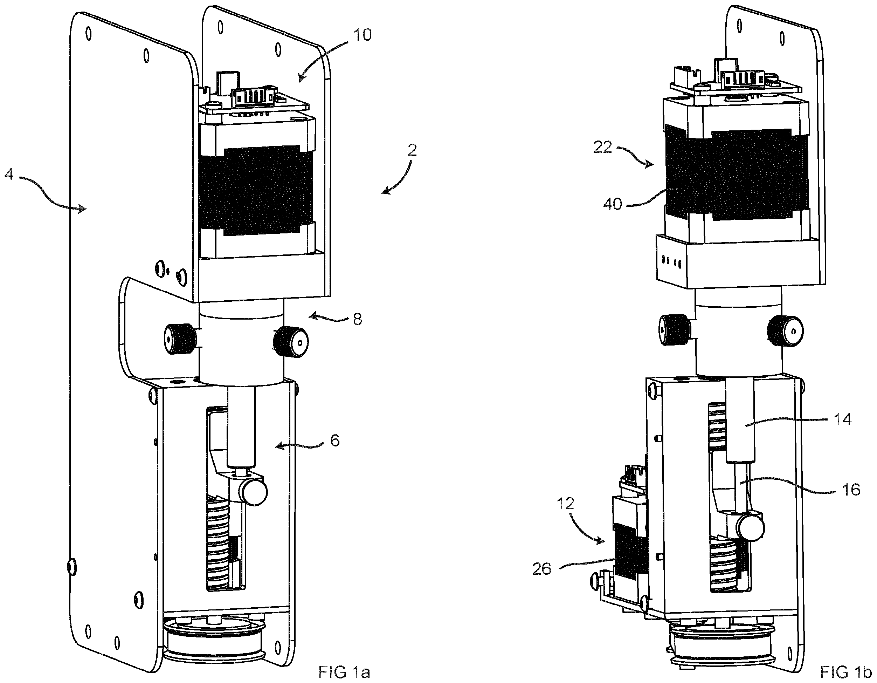

Figure 1a is a perspective view of a pump system with rotary valve according to an embodiment of the invention;
Figure 1b is a perspective view of the pump system with rotary valve of figure 1a with portion of support structure removed;
Figure 2a is a top view of a valve system in a first selected position according to an embodiment not forming part of the claimed invention;
Figure 2b is a cross-sectional view through line R-R and figure 2c a cross-sectional view through line O-O of figure 2a;
Figure 3a is a top view of a valve system in a second selected position according to an embodiment not forming part of the claimed invention;
Figure 3b is a cross-sectional view through line J-J and figure 2c a cross-sectional view through line L-L of figure 3a;
Figure 4a is a top view of a valve system in a third selected position according to an embodiment not forming part of the claimed invention;
Figure 4b is a cross-sectional view through line E-E and figure 4c a cross-sectional view through line N-N of figure 4a;
Figure 5a is an exploded perspective view of a valve system according to an embodiment not forming part of the claimed invention;
Figure 5b is a cross-sectional perspective view of a valve system according to an embodiment not forming part of the claimed invention;
Figure 6a is an exploded perspective view of a valve for a pump system according to another embodiment of the invention;
Figure 6b is a top view of the embodiment of figure 6a;
Figures 6c and 6d are cross-sectional views through lines E-E and H-H respectively of figure 6b;
Figure 7a is a top view of a valve for a pump system with the valve in a first position according to an embodiment of the invention;
Figure 7b is a cross-sectional view through line F-F of figure 7a;
Figure 7c is a side view of the valve system of figure 7a;
Figure 7d is a perspective cross-sectional view of the valve system of figure 7a;
Figure 8a is a top view of the valve system of Figure 7a with the valve in second position;
Figure 8b is a cross-sectional view through line I-I of figure 8a;
Figure 9 is a perspective cross-sectional view of a valve for a pump system according to another embodiment of the invention;
Figure 10 is a perspective cross-sectional view of a valve for a pump system according to another embodiment of the invention;
Figure 11a is a top view of a valve system according to an embodiment not forming part of the claimed invention;
Figure 11b is a perspective cross-sectional view of the valve system of figure 11a;
Figure 11c is a side view of a valve system according to an embodiment not forming part of the claimed invention;
Figure 12a is a top view of a valve system according to an embodiment not forming part of the claimed invention;
Figure 12b is a perspective cross-sectional view of the valve system of figure 12a;
Figure 13 is a graph representing the signals of a position sensor comprising magnets and a Hall Effect sensor of a valve for a pump system according to an embodiment of the invention;
Figure 14 is a schematic diagram of an automated flow cytometer incorporating a pump system with rotary valve according to an embodiment of the invention.

Referring to the figures, a pump system with rotary valve 2 according to an exemplary embodiment of the invention comprises a housing or support structure 4, a pump 6, a rotary valve 8, and an electronic control system 10. In the illustrated embodiment, the pump 6 is in the form of a syringe or piston pump, however within the scope of this invention other pumps could be employed such as a diaphragm pump or a rotary pump or any other type of pump that allows to draw in liquid from an inlet of the valve and subsequently expel liquid through an outlet of the valve. Within the scope of the invention any pump with a variable volume pump chamber that allows to store liquid between the drawing in phase and subsequent expulsion phase can be employed depending on the application. The piston type of pump or syringe pump is advantageous in microfluidic applications in view of the accurate control in the amount of liquid that is pumped.

The valve 8 comprises a stator 18, 18', a rotor 20, an actuator 22 coupled to the rotor and a position sensing system 24 configured to measure the rotary position of the rotor relative to the stator. The actuator 22 may be an electrical actuator of various types, for instance a rotary motor 40 with a rotor having an output access coupled directly or through a gear train or other type of transmission to the rotor in order to turn the rotor in different positions. In an advantageous embodiment, the motor 40 of the actuator 22 may be a stepping motor, although other types of electrical motors could also be employed.

It may be noted that in the present invention, the term "rotor" and "stator" designate parts that are relatively rotatable with respect to each other, whereby:
- the rotor may have a fixed position with respect to a reference body (e.g. on which a device incorporating the valve is fixed), and the stator is rotatable with respect to a reference body and the rotor, or
- both the rotor and stator are rotatable with respect to a reference body and with respect to each other, or
- the stator has a fixed position with respect to a reference body and the rotor is rotatable with respect to the reference body and the stator.

In an embodiment where the stator rotates and the rotor is fixed relative to the reference body, the actuator may be coupled to the stator. In an embodiment where the rotor and stator both rotate relative to the reference body and to each other, actuators can engage both rotor and stator, or one actuator can be provided that couples to the rotor or to the stator if the stator and rotor are coupled together via a transmission.

In the illustrated embodiment, the pump 6 is a syringe or piston pump comprising a pump body 14 enclosing a pump chamber 28 and a movable pump actuated element 16, in present example comprising a pump piston 30 in the form a plunger that is displaced linearly in order to increase the volume in the chamber to draw in liquid or to decrease the volume in the chamber to expel a liquid therefrom.

The control system 10 comprises an electronic circuit configured to operate the valve 8, to set the valve and to operate the pump and possibly supply information to and receive inputs from a user or other electronic control systems for operation of the system. The control system may be distributed within devices of the overall system, or form a centralized unit. The general design and configuration of control systems for motors and valves are *per se* known and shall not be described in detail in the present disclosure.

In an aspect of the invention, the control system is configured to receive and process signals from a position sensing system 24 of the valve 8 in order to determine the angular position of the valve and to control the actuator 22 that drives the rotation of the rotor 20 of the valve.

The stator 18 of the valve 8 comprises a stator body 32 in which stator fluid channels 34 are formed, the stator body comprising a bearing surface 50 that bears against a bearing surface 70 of the rotor 20. The stator 18 further comprises fluid ports 56 mounted on the stator body 32 for connection to fluid supply lines 58 or fluid delivery lines 60 that may include a fluid waste line. The fluid ports 56 may be arranged in a distributed manner around the stator body 32, for instance as shown in the illustrated embodiment arranged in a spaced apart manner circumferentially around the stator body for feeding liquid into respective stator fluid channels 34 in the stator body 32.

The stator fluid channels 34 comprise at least one stator input fluid channel 52 extending between an input end 62 arranged at one of said fluid ports 56, to an output end 64 positioned at the bearing surface 50. The stator fluid channels 34 further comprise at least one stator output fluid channel 54 comprising an input end 66 positioned at the bearing surface 50 and extending to an output end 68 positioned at one of the fluid ports 56 for fluid delivery or fluid waste 56. The stator fluid channels may however comprise a plurality of stator input fluid channels connected to different fluid ports for a plurality of fluid supply lines 58. The stator fluid channels may also comprise a plurality of stator output fluid channels connected to different fluid ports 60 coupled to a plurality of fluid delivery or fluid waste lines 56. Depending on the position of the valve rotor 20, different inlet liquids may thus be selected and drawn into the pump chamber, and different outlets may be selected for expelling the liquid from the pump chamber depending on the intended operation such as delivery of a liquid to a certain delivery line or washing through of the valve with a liquid sent to a waste line.

The rotor 20 comprises a rotor body 36 having an outer bearing surface 70 mounted and slidably movable against the inner bearing surface 50 of the stator 18. In the illustrated embodiment, the stator may have a conical or cylindrical inner bearing surface 50 whereas the rotor has a complementary conical or cylindrical outer bearing surface 70 in a snug sliding fit therebetween.

The rotor 20 further comprises at least one rotor fluid channel 38 in the rotor body 36.

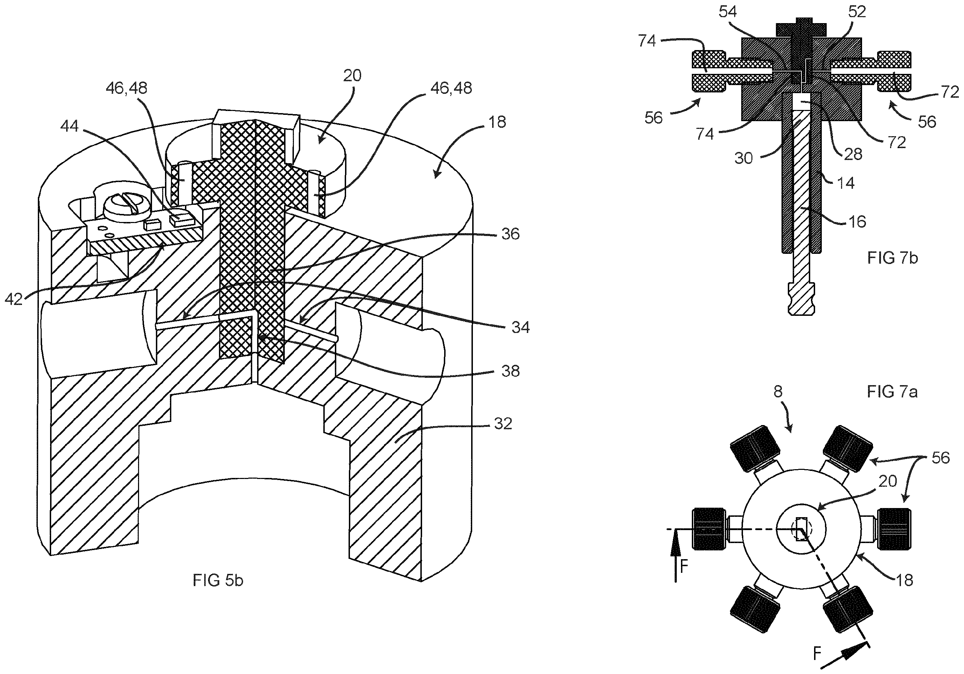

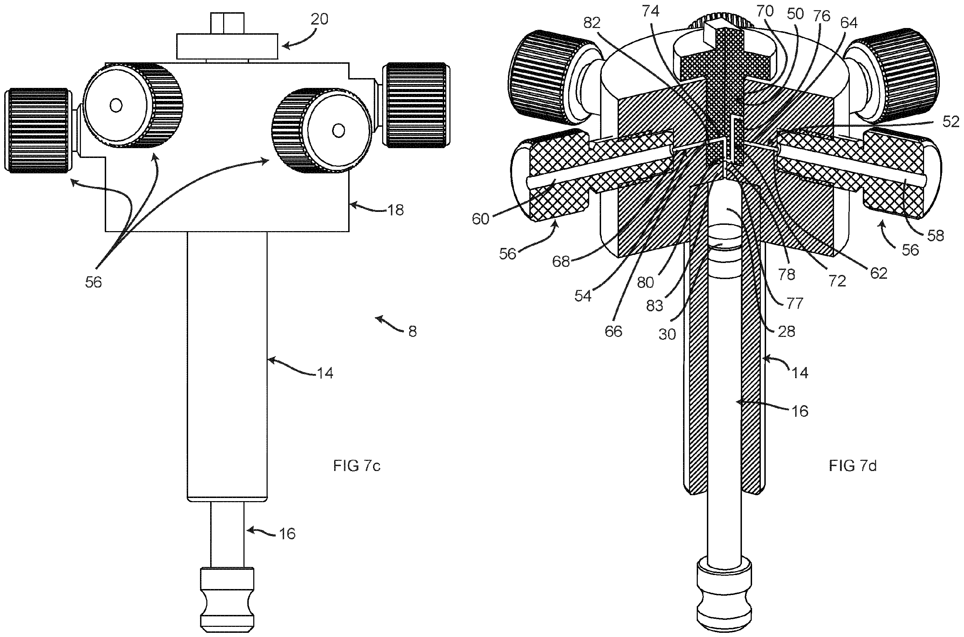

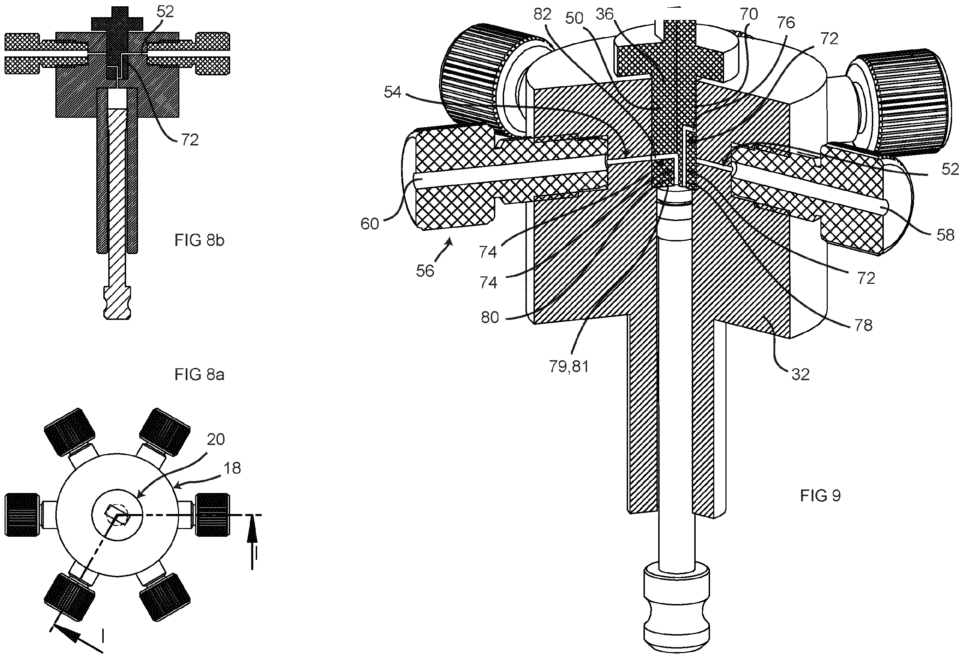

According to an aspect of the invention illustrated in figures 7b, 7d, 8b, 9, 10, 11a-12b, the rotor 20 comprises at least two rotor fluid channels 38 comprising:
- a rotor input fluid channel 72 extending between an input end 76 at the outer bearing surface 70 to an output end 78 positioned at or proximate a pump chamber side 79 of the rotor; and
- a rotor output fluid channel 74 extending between an input end 80 positioned at or proximate the pump chamber side of the rotor 79 to an output end 82 positioned at the outer bearing surface 70 of the rotor body 36.
The input end 76 of the rotor input fluid channel 72 and the output end 82 of the rotor output fluid channel 74 are configured to be aligned with an output end 54 of the stator input fluid channel 52 respectively an output end 66 of a stator output fluid channel 50 at a respective specific angular position of the rotor relative to the stator. The rotor can thus be turned to a specific angle such that the stator input fluid channel 52 is in fluid communication with the rotor input fluid channel 72, as illustrated in figures 8a, 8b, and at another specific angular position the stator output fluid channel 54 is in fluid communication with the rotor output fluid channel 74 as illustrated in figures 7a, 7b, 7d.

The positions of the input and output ends of the various channels may be configured such that each rotor fluid channel 38 is in communication with only one stator fluid channel 34 over a 360° rotation of the rotor 20. Alternatively one or more of the fluid channels of the rotor could each, over a 360° rotation of the rotor relative to the stator, be in fluid communication with two or more stator fluid channels. The latter configuration may allow, for instance,
- a specific liquid drawn in to the pump chamber to be distributed to one of a plurality of fluid ports depending on the selected angle of the rotor relative to the stator, and/or
- to selectively connect the pump chamber to a selected one of a plurality of fluid ports 56 for supply of a selected one of a plurality of different supply liquids depending on the selected position of the rotor relative to the stator.

In the embodiments illustrated in figures 8a, 8b, 7a, 7b, 7d, 9, 10, 11a-12b there is one rotor input fluid channel 72 and one rotor output fluid channel 74, however in variants it is possible to have a plurality of rotor input fluid channels 72 and/or a plurality of rotor output fluid channels 74.

It may be noted that in the above described description, the term "input fluid channel" and "output fluid channel" are simply to designate the channels which are connected to fluid supply and those connected to fluid delivery, however the illustrated pump system is reversible and a supply line could be a delivery line and a delivery line could be a supply line. Moreover, the system according to the invention can be used for drawing in and expelling liquid and then drawing in the expelled liquid, for instance in a closed circuit application, or for various selected orders of drawing and expelling liquid from various lines connected to the fluid ports on the stator body.

Advantageously, the output end 78 of the rotor input fluid channel 72 exits at the pump chamber end face 79 of the rotor that is positioned close to or bounding the pump chamber 28. Similarly the input end 80 of the rotor output fluid channel 74 is positioned at the pump chamber end face 79 of the rotor which bounds or is positioned close to the pump chamber 28.

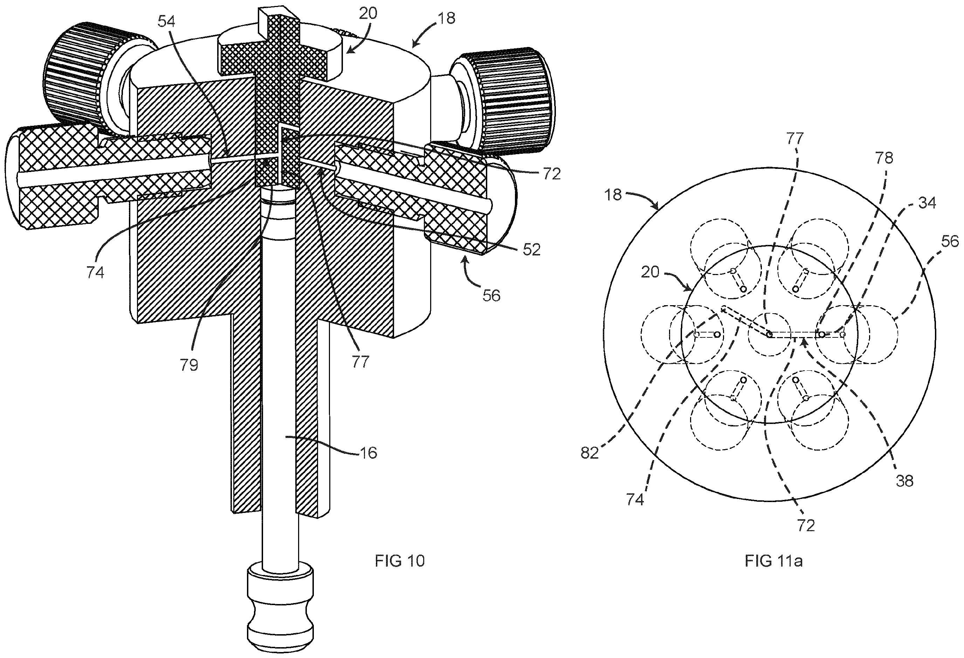

As mentioned previously, according to an aspect of the invention, the rotor input fluid channel and output fluid channel are distinct and separate channels such that the dead volume of fluid in the channels during operation of the drawing in liquid and expelling liquid is nil or very small and essentially limited to the volume of the liquid in the common section 77 of the input and output channels leading to the pump chamber 28 as illustrated in the embodiments of figures 7d and 10. The volume of liquid in the common section 77 serves both for the drawing in of liquid as well as the expelling and thus forms a section of channel storing residual liquid that cannot be entirely drawn through the valve in a continuous direction flow. This "residual volume" should be as small as possible to improve washing and reduce waste and contamination when switching from one liquid to another. In the invention this is achieved by providing at least one rotor input fluid channel distinct and from at least one rotor output fluid channel, with a very short common section connecting the channels to the pump chamber 28. In the embodiment illustrated in figures 7b and 7d a separating wall portion 83 of the stator 18 separates the rotor 20 from the pump chamber 28, the common section being formed through the separating wall portion 83 in order to connect the pump chamber 28 to the rotor 20.

In another embodiment as illustrated in figure 9, both the distinct and separate rotor input fluid channel 72 and rotor output fluid channel 74 extend to the pump chamber end face 79 of the rotor, without a stator separating wall portion, and therefore without a common section. In this embodiment the pump chamber end face 79 of the rotor directly bounds the upper end of the pump chamber 28. The residual volume when the pump piston 30 is positioned against or essentially against the face 81 of the pump chamber 28, which in this embodiment is formed at least partially by the rotor end face 79, can be zero or essentially zero. This advantageously also allows avoiding trapping air within the chamber by enabling to purge entirely the rotor pump chamber 28 in a continuous direction flow through of liquid in the channels.

An important advantage of the invention is that the distinct rotor input and output fluid channels allow an essentially continuous flow through system when switching from inputting liquid to outputting liquid thereby allowing to purge through the fluid channels without leaving any residual waste as well as ensuring that the lost amount during a purging operation requires at a minimum purging only the fluid channels which may have a very small volume thereby reducing waste.

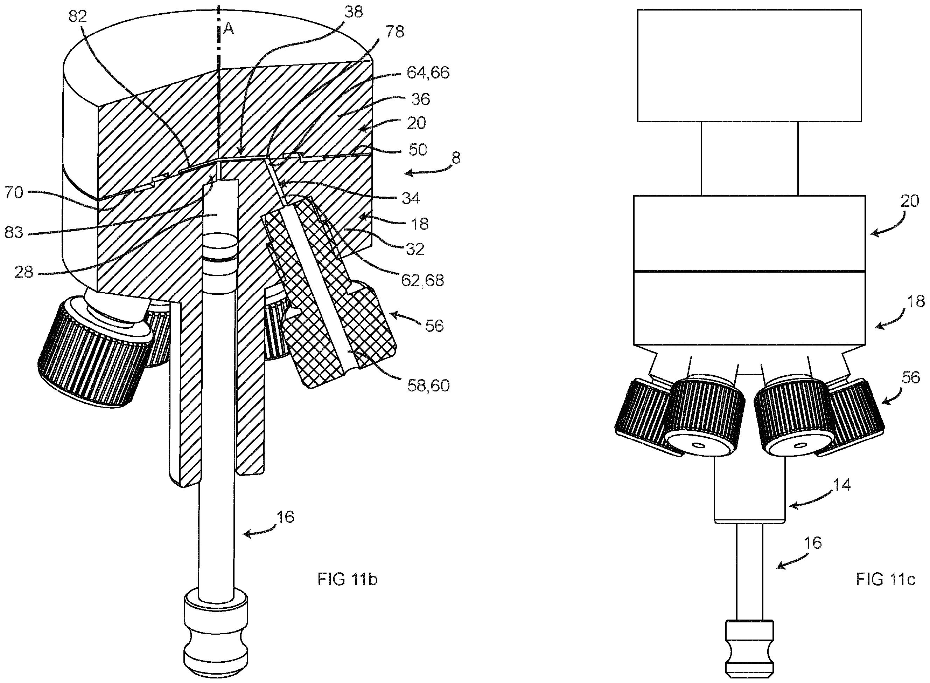

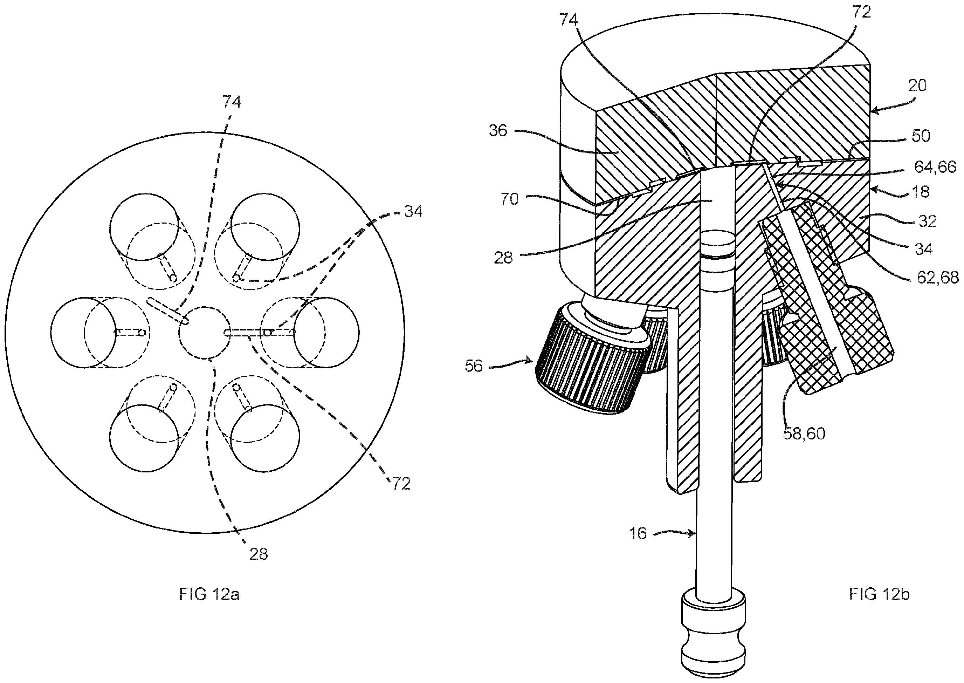

In the embodiments illustrated in figures 11a, 11b and 12a, 12b, the rotor pump chamber end face 79 forms the rotor valve bearing surface 70 slidably bearing against an axial end face of the stator 18 that forms the stator valve bearing surface 50. The valve bearing surfaces in this embodiment thus form a thrust bearing, whereas in the previously described embodiments the valve bearing surfaces form substantially a journal bearing, that may be cylindrical or conical. The rotor and stator are provided with further means (not shown) to position, guide and hold the rotor to the stator and allow rotation of the rotor 20 about its rotation axis A. The rotor fluid channels 38 comprise grooves on the rotor bearing surface 70 that are configured to fluidically interconnect an end 64, 66 of a stator fluid channel 34, 52, 54 with the pump chamber 28 at a selected specific angle. In the embodiment illustrated in figures 11b, 11c and 12b, the fluid ports 56 are arranged around the stator and project therefrom partially radially and partially axially.

In variants, the fluid ports can however project outwardly from the stator body at different angles, from radially as illustrated for instance in the embodiment of figure 10, to axially (not shown). The stator fluid channels in the various embodiments illustrated are designed as straight channels however in variants it is possible that the stator fluid channels are designed with curved or other non-straight shapes, for instance to configure the position of the inlet and outlet in a non-aligned manner.

In the embodiment of figure 11a and 11b, the stator body 32 comprises a separating wall portion 83 separating the pump chamber 28 from the rotor axial end face 79 (that also serves as the valve bearing surface 70). In this variant, there is a common channel section 77 similar to what has already been described in relation to the embodiments of figure 7d and 8b. In this embodiment the rotor fluid channels 38, including the rotor input fluid channel 72 and rotor output fluid channel 74, may comprise a continuous groove spanning across the common channel section so as to be in fluid communication with the pump chamber 28, whereby ends 78, 82 of the rotor fluid channels extend over selected ends of the stator fluid channels 34 that are at the stator valve bearing surface 50 at selected angles of rotation. The rotor 20 can thus be rotated about its axis A relative to the stator 18 to any one of a plurality of selected angles to interconnect fluidically any one of a selected stator fluid channel 34, 52, 54 with the pump chamber 28 for drawing in or expelling liquid from and to the fluid supply and delivery lines 58, 60 as already described above in relation to the other embodiments.

In the embodiment of figures 12a, 12b, the pump chamber 28 is directly bounded at its end by the rotor axial end face 79 (that also serves as the valve bearing surface 70). In this variant, the rotor fluid channels may comprise separate sections forming the rotor input fluid channel 72 and the rotor output fluid channel 74. It may be noted that in this embodiment the rotor fluid channel may however also have a continuous groove including the rotor input fluid channel 72 and rotor output fluid channel 74 similar to the embodiment of figure 11a. In the embodiment of figures 12a and 12b, there is essentially no residual volume in the sense that the rotor and stator fluid channels interconnect fluidically to allow a through-flow of liquid in only one direction in the channels 34, 38 within the valve thereby allowing to wash through the valve efficiently, with minimal waste and avoidance of trapping air or residual liquids.

The stator ports and corresponding stator fluid channel may be at different axial heights, or in the same plane, whereby in the latter variant, the angles between the rotor channels and stator channels need to be configured in a manner to avoid that having two channels of the rotor connected to two stator channels simultaneously. In a variant, the rotary valve could optionally further comprise a bypass mode whereby in at least one rotary position corresponding to the bypass mode, both rotor channels are connected to respective stator channels simultaneously.

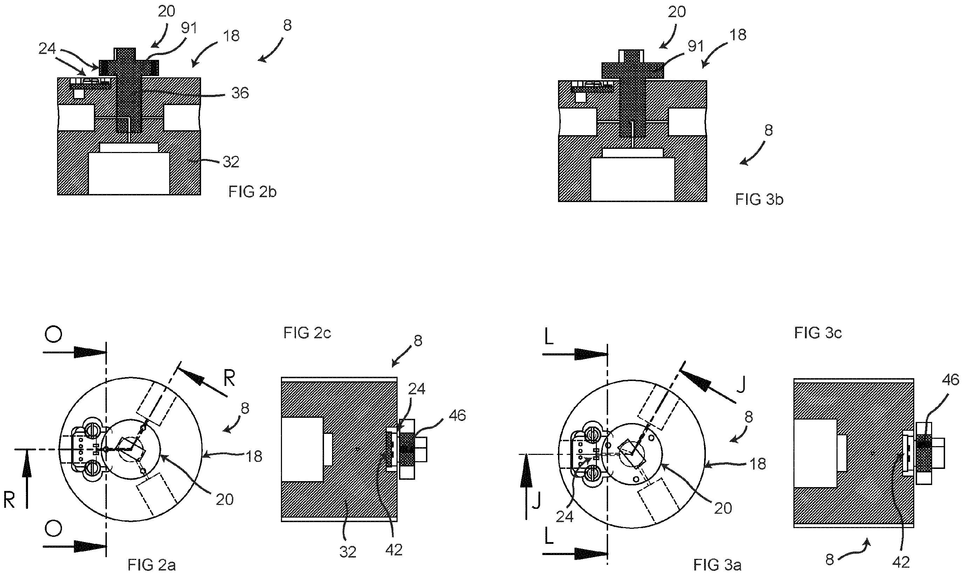

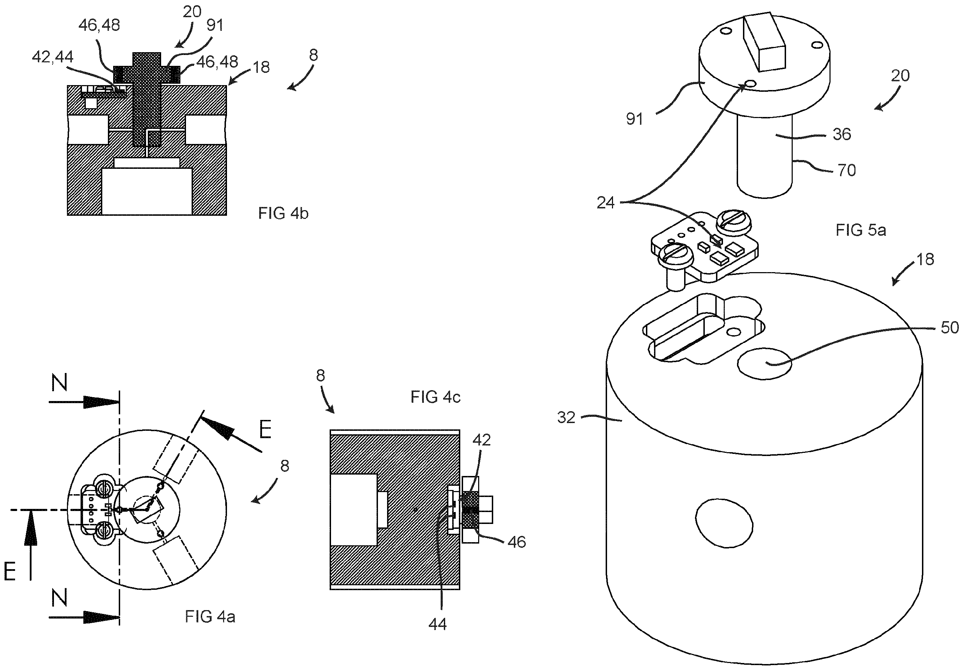

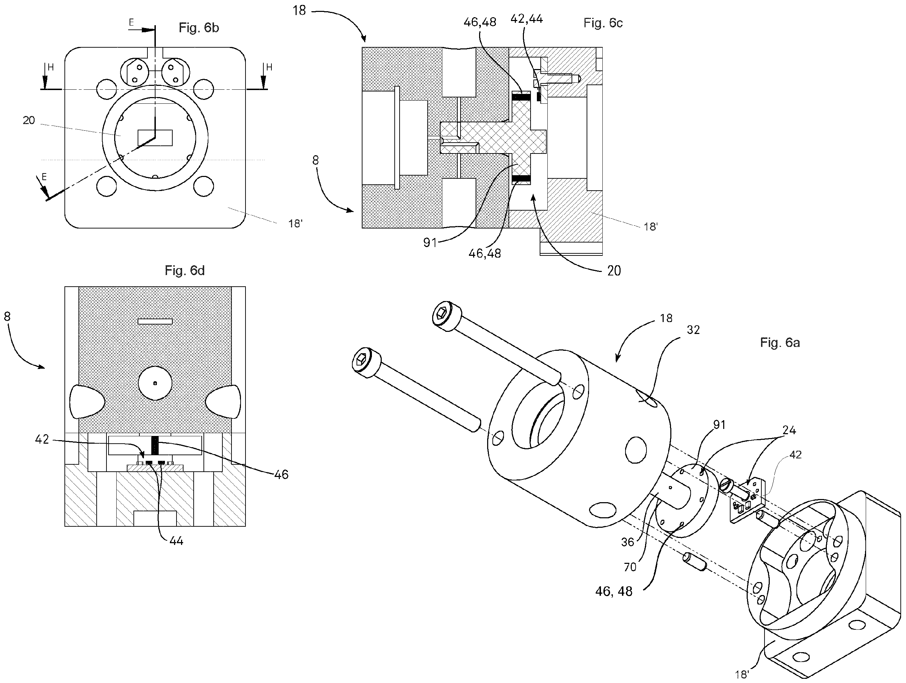

Referring to figures 2a to 5b, and 6a to 6d, according to another aspect of the invention, the position sensing system 24 comprises a position detector 42 mounted in the stator and complementary position markers 46 mounted in the rotor 20. In the embodiment illustrated in figures 2a to 5b the position detector 42 is mounted on a portion 18 of the stator that forms part of the valve body 32. In the embodiment illustrated in figures 6a to 6d, the position detector 42 is mounted on a portion 18' of the stator coupled to, or forming part of, the housing or support structure 4, and to which the valve body 32 is removably assembled. In the latter variant, the valve body 32 and rotor 20 may advantageously be disassembled from the stator portion 18' coupled to the housing or support structure 4 without disconnecting or removing the position detector 42.

The position markers 46 in the rotor are configured to provide a plurality of discrete detectable positions spaced around the rotor 20 at angular spacings that correspond to the angular spacings between the ends 64, 66 of the stator fluid channels 34 that are positioned at the stator valve bearing surface 50. This allows the rotor to be turned to each one of the angular positions corresponding to the ends 64, 66 of the stator fluid channels that are on the bearing surface 50 in order to align the ends of the rotor fluid channels 38 that are positioned at the rotor body outer bearing surface 70 for fluid communication between the rotor fluid channel 38 and stator fluid channel 34.

In an advantageous embodiment, the discrete detectable positions are provided by discrete sensor position markers 46 mounted in the rotor around the circumference of a disc portion 91 of the rotor. One of the position markers may be configured to provide a signal that is different from the signals produced by the other position elements when detected by the detector 42 in order to enable determining the absolute position of the rotor from at least one reference position.

In an advantageous embodiment, the position markers 46 comprise discrete magnets mounted on or in the rotor at said angularly spaced positions corresponding to the stator fluid channel ends on the bearing surface 50, whereby in a preferred embodiment the position markers may be axially aligned with the said stator fluid channel ends 64, 66. It should however be noted that the position markers may also be offset with respect to the channel end whereby this offset is taken into account in the electronic computation of the rotor position. In this embodiment, the detector 42 comprises a magnetic field detector, for instance a Hall sensor, or other *per se* known magnetic field sensor or induction coil sensor that is capable of detecting the passage of the position marker magnet.

In an advantageous embodiment, the magnetic field detector may comprise a pair of magnetic field sensors, for instance a pair of Hall effect sensors, mounted at slightly spaced apart positions. The pair of sensors enables both the direction of rotation of the rotor as well as the relative angle of the rotor with respect to the stator to be detected accurately. The sensing surfaces of the pair of sensors may be linearly aligned with respect to each other, or may be positioned at an angle of between 180° and 90° with respect to each other. The magnetic sensing surfaces of the Hall sensors may be arranged in the stator axially above or below the position markers 46 at a small air gap with respect to the rotor disc section 91 carrying the position markers, such that the direction of rotation of the rotor as well as the relative angle of the rotor with respect to the stator can be detected accurately. One of the position element magnets may have a magnetic orientation that is opposed polarity to the other magnets such that it forms the signal for the absolute or reference position element discussed previously.

It may be noted that within the scope of the invention, other discrete position markers and corresponding detector may be provided, for instance the position markers may be made of a material a high magnetic permeability and the detector in such case may comprise an induction element that generates an inductive field that creates a magnetic field within the position markers that may be picked up by the detector. Another variant is to place a static magnetic field close the Hall effect sensor(s) and to use the high magnetic permeability material to vary the strength of the magnetic field being measured. In another variant, the position marker may comprise an electrically conductive material or having a high relative permeability and the detector may be a capacitive element that measures the change in capacitance due to the position of the conductive position marker.

In an advantageous embodiment, the two Hall sensors of the position sensing system 24 monitor the position of the nearest position marker magnet 48 situated in the rotor 20. The Hall sensors 44 may be linear (ratiometric), and can thus accurately sense the position of the position marker magnet. Used in a differential way to compensate for external perturbation, both Hall sensors 44 can accurately detect when the position marker magnet has reached the middle position between the two Hall sensors. The rotation direction can thus also be measured. As the Hall sensors 44 can also sense the magnetic field direction, a zero position is defined with a magnet mounted in the opposite direction, resulting in a reversed magnetic field compared to the other position marker magnets. At initialization of the valve this reference marker position magnet is searched by the sensors in a homing operation and the reference position is set.

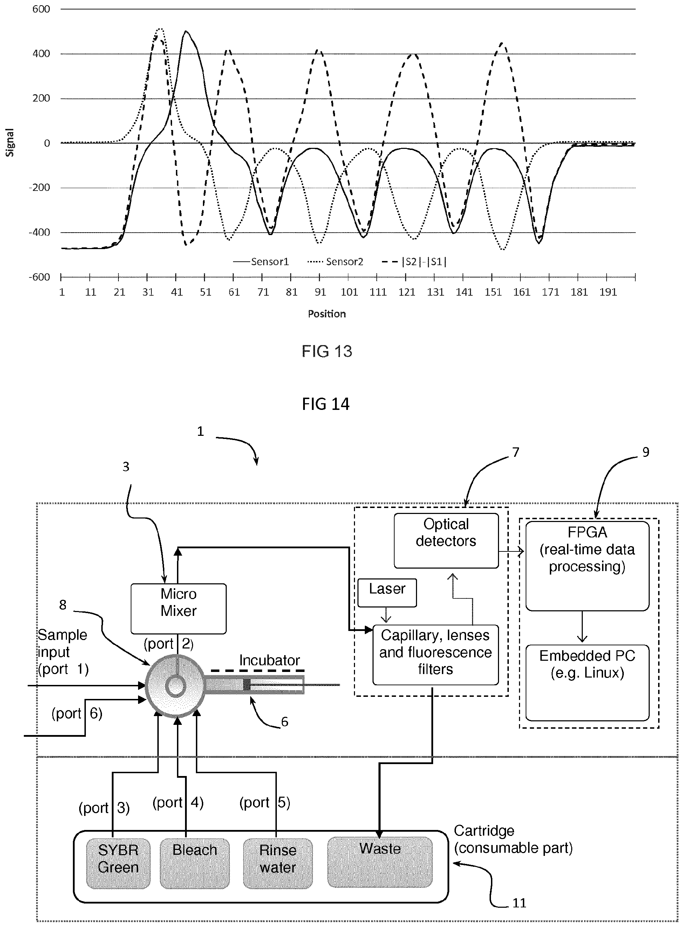

The signals generated by the passage of magnets over the Hall sensors is illustrated in figure 13. In order to detect a position when the rotor relative to the stator aligns a rotor fluid channel with a stator fluid channel, the following criteria met simultaneously can for instance be used:
1. The difference of the signals of both Hall sensors is zero, and
2. The slope of signal composed by the difference of the absolute values of both Hall sensors is negative or positive depending on the rotation direction. This condition enables to distinguish the aligned rotor and stator channel positions from intermediate positions.

A homing procedure may include the above working with the absolute values of both sensors and simultaneously checking the sign of the Hall effect sensor signals. When the reference magnet with inverted polarity is between the pair of Hall effect sensors, both sensors generate a signal with inverted sign compared to the expected signal for a non-reference magnet.

Instead of a magnetic or electrical sensing method, the position sensing system 24 may also comprise an optical detector on the stator 18 and the position markers on the rotor 20 may be in the form of optical markings, for instance light absorbing or light reflecting markings positioned on the rotor that are sensed as they pass the optical detector.

Advantageously, the provision of position markers of a position sensing system 24 directly on the rotor 20 of the valve 8 allows to determine the exact position and thus to position the valve rotor accurately with respect to the valve stator. This further allows the stator and rotor fluid channels 34, 38 to have the minimal diameter required for the fluid communication without the need to compensate for misalignment between the rotor and stator as is typical in conventional systems where larger channel openings are required at the bearing surfaces in order to ensure sufficient overlap to avoid excessive fluid resistance in the case of misalignment. In conventional systems, this misalignment is due to the positioning of valve position sensors on the actuator 22 or in the transmission system between the actuator and the valve rotor whereby a certain mechanical play in the transmission system or between the actuator and the rotor is unavoidable, particularly when there is a change of direction of the actuator, but also taking into account thermal dilatation and wear during the lifetime of the pump system and rotary valve.

### Example of applications

### Example of sequence:

1. Pump into pump chamber Liquid A
2. Pump into pump chamber Liquid B (B is thus mixed with A)
3. Pump out Liquid A+B to output port (for measurement)
4. Pump in Cleaning liquid
5. Pump out Cleaning liquid to output port
6. Pump in Rinsing liquid
7. Pump out Pump Rinsing liquid to output port
8. Optionally restart over to 1.

### Example of an automated sample preparation prior to an analysis (optical, electrical ...):

Requires a 6-way valve with 2 stages.

### Fluid port configuration:

1. Sample
2. Reagent
3. Output to measurement cell
4. Cleaning liquid (aggressive)
5. Not used
6. Rinsing liquid

*Comment:* ports 1, 3, 5 are connected to one channel, and ports 2, 4, 6 the second one.

### Example of Sequence:

1. Only if required (at start): Prime pump with all incoming liquids and rinse syringe to output with rinsing liquid,
2. Pump in 200 µl of sample
3. Pump in 20 µl of reagent
4. Mix sample and reagent in pump chamber
5. Pump out the whole mixture to output
6. Pump in 50 µl of cleaning liquid
7. Pump out cleaning liquid to output
8. Pump in 50 µl of rinsing liquid (first dilution of a factor -50)
9. Pump out rinsing liquid to output
10. Pump in 250 µl of rinsing liquid (second dilution of a factor ∼250, total dilution of a factor ∼12'500)
11. Pump out rinsing liquid to output
12. Restart over to point 2.

Advantages of embodiments of the invention relating to the separate rotor fluid channels are discussed below in relation to such applications by way of example.

### High dilution and low cross-contamination:

When rinsing or changing liquid in the pump chamber, a minimum cross-contamination is obtained due to the very low dead-volume. When emptying the pump from Liquid A and refilling it with liquid B, the contamination of Liquid A in Liquid B is of the amount of the dead-volume. The dilution factor is given by the ratio between the dead-volume and the amount of newly pumped liquid (in this case Liquid B).

### High precision dosing of compounded mixes:

When dosing and mixing two or more liquids by filling the pump chamber sequentially, the low dead-volume allows more precise dosing of small quantities. The internal dead-volume of the valve interfere in the dosing precision. For example, after pumping in 50 µl of liquid A, one wants to pump in 50 µl of liquid B, however the internal dead-volume of the rotary valve is still filled with liquid A. If this dead-volume is of about 20 µl, one needs to compensate this volume at each step, which renders this operation very complex, or impossible if the desired quantity is smaller than the dead-volume.

### Effective air purging:

A very small or zero dead-volume allows a straightforward removal of the air when priming the pump. In conventional pumps, a thick air layer (of the volume of the dead-volume) remains in the syringe or sticks to the piston. This volume which cannot be expelled prevents the good accuracy for dispensing and is difficult to flush or dilute.

The advantages of this position sensing system on the valve rotor are:
- One can work with smaller inner channels. Typical channel diameters in conventional valves are around 1mm, whereas in the present invention smaller diameters can be used. This allows a huge decrease in the dead-volume of the valve. Smaller channels means less internal volume of both passage and dead volumes;
- The quality of the mechanic coupling between the valve rotor and the motor and the aging of the mechanical properties does not affect the valve operation and accuracy;
- The size of the valve motor that is necessary in conventional systems uses a relatively large amount of power because a high torque is necessary to position the rotor with sufficient accuracy. The instruments welcoming these valves thus require an expensive and over-dimensioned power supply compared to the rest of the instrument. With the positioning system according to embodiments of the invention, one can use a low-cost DC motor, with a gearbox, even with a poor mechanical coupling to drive the rotary valve. This also provides the advantage to enable integration of rotary valves into portable devices;
- One can rotate the valve in both directions, thus optimizing the wear of the valve rotor by reducing the traveled distance (this can easily represent a factor of two);
- Greater reliability and confidence in the fact that the fluid port is really connected (always appreciated in automated devices);
- Extremely robust solution: the position sensor system measurement according to certain embodiments may be easily made water and dust proof

In an embodiment, the pump system with rotary valve according to the invention is a microfluidic pump system with rotary valve for liquid sample measurement applications, or for liquid sample preparation applications. Such sample preparation or measurement may typically be used in biological, medical fields or other liquid analysis (e.g. water).

A microfluidic pump system with rotary valve is configured to pump and dispense liquids in volumes ranging between 0.1 µL and 10000 µL per pump cycle, more typically between 1 and 1000 µL (whereby 1 µL corresponds to 10⁻⁶ Litres). In view of the need for high accuracy in pumped volumes, syringe or piston pumps are well adapted for integration in a microfluidic pump system.

An application that may advantageously employ the microfluidic pump system with rotary valve according to the invention includes measuring particles, bacteria, chemical agents in water of other liquids, or any other type of cell.

The microfluidic pump system with rotary valve according to an embodiment of the invention may advantageously be employed in a fully automated flow cytometer, an example of which is illustrated schematically in figure 14. The illustrated flow cytometer system according to an embodiment of the invention comprises a pump system 6 with rotary valve 8 as previously described, connected to a sample source via a sample input port (port 1) and to output ports including a port (port 2) to a microfluidic liquid mixer device 3, ports 3-5 to reagents and cleaning liquids 11 that may be provided in one or more replaceable cartridges. The flow cytometer further comprises a sample analyzer 7 and a processing circuit and software 9 for processing the measurement signals from the sample analyzer. The sample analyzer may function according to various per se known sample measurement techniques, for instance based on spectroscopy, absorbance or transmission measurement, or electrical measurements.

### Example - Protocol to measure bacteria using a microfluidic pump system with rotary valve according to an embodiment of the invention as illustrated in Fig. 14:

Valve ports :
port 1 = sample input
port 2 = mixer (then optic then waste)
port 3 = sybr green
port 4 = bleach
port 5 = rinse water
port 6 = spare port (for further applications)

This configuration may be used for instance with a rotary valve with two rotor fluid channels, whereby for instance Ports 1,3,5 connect alternately to one rotor fluid channel, and Ports 2,4,6 to the second rotor fluid channel.
Speed pickup = 200 µL/min
Speed dispense = 200 µL/min

1) Priming the sample.
   - Heat the incubator at 37°c.
   - Move to port 1.
   - Pickup 100 µL of sample.
   - Move to port 2.
   - Dispense 100 µL of sample.
   - Move to port 1.
   - Pickup 20 µL of sample.
   - Move to port 2.
   - Mix 20 µL of sample 1 time (1x : push and pull the 20 µL into the mixer at 200µL/min) : capacity check in mixer to test if liquid is present (if mixer (variable volume) inflates it's ok).
   - Dispense 20 µL to port 2.
2) Mix the sample.
   - Move to port 1.
   - Pickup 67.5 µL of sample.
   - Move to port 3.
   - Pickup 15 µL of sybr green.
   - Move to port 1.
   - Pickup 67.5 µL pf sample.
   - Move to port 2.
   - Mix 20 µL of sample 3 times (3x : push (1000µL/min) and pull (6000µL/min)the 20 µL into the mixer).
3) Incubation.
   - Incubate the mixed solution (sample + sybr green) into the syringe during 10 min at 37°C.
4) Filling the microfluidics.
   - Dispense 50 µL into port 2.
5) Analyzing.
   - Dispense the remaining 100 µL into port 2 at 20 µL/min and analyze the water (counting events in optics).
6) Cleaning (optional).
   - Move to port 4.
   - Pickup 20 µL of bleach.
   - Move to port 2.
   - Dispense 20 µL.
   - Move to port 5.
   - Pickup 50 µL of rinse water.
   - Move to port 2.
   - Dispense 50 µL.
   - Move to port 5.
   - Pickup 350 µL of rinse water.
   - Move to port 2.
   - Dispense 350 µL of rinse water.

### List of references used

Pump system with rotary valve 2
   housing / support structure 4
   pump 6
      actuator 12
         motor 26
      pump body 14
         pump chamber 28
      pump actuated element 16
         pump piston 30
   valve 8
      stator 18, 18'
         stator body 32
            valve bearing surface 50
            separating wall portion 83
         stator fluid channels 34
            stator input fluid channel 52
               input end 62
               output end 64
            stator output fluid channel 54
               input end 66
               output end 68
            fluid ports 56
            fluid supply 58
            fluid delivery / fluid waste 60
      rotor 20
         rotor body 36
            valve bearing surface 70
            pump chamber end face 79
            disc portion 91
         rotor fluid channels 38
            rotor input fluid channel 72
               input end 76
               output end 78
            rotor output fluid channel 74
               input end 80
               output end 82
            common section 77
      actuator 22
         motor 40
         rotor
            output axis
         stator
      position sensing system 24
         detector (in stator) 42
            Hall effect detectors 44
         position elements (in rotor) 46
            magnets 48
   control system 10
Flow cytometer 1
   pump 6
   valve 8
   liquid mixer device 3
   sample analyser 7
   detector(s)
   processing circuit and software 9
liquid reagents 11
   (e.g. in the form of a replaceable or removable cartridge or cartridges)

## Claims

1. **Pump system with rotary valve (2)** comprising a pump (6) with a variable volume pump chamber (28) that allows to store liquid between a drawing in phase and subsequent expulsion phase, and a valve (8), the valve including a rotor (20) comprising a rotor body (36) and at least one rotor fluid channel (38), a stator (18, 18') comprising a stator body (32) and a plurality of stator fluid channels (34) connected to fluid ports (56) mounted on the stator body coupled to respective fluid supply (58) and delivery lines (60), the fluid ports arranged in a circumferentially spaced apart manner around the rotor, the stator body comprising a valve bearing surface (50) and the rotor body (36) comprising a complementary valve bearing surface slidably engaging the stator valve bearing surface, the rotor fluid channels (38) comprise at least one rotor input fluid channel (72) having an input end (76) at said bearing surface (70) of the rotor and an output end (78) in fluid communication with the pump chamber (28), and at least one rotor output fluid channel (74) distinct from the rotor input fluid channel and having an input end (80) in fluid communication with said pump chamber and an output end (82) at said valve bearing surface (70) of the rotor body (36), the rotor input fluid channel configured for fluid communication with at least a first of said stator fluid channels at a first relative angular position of the rotor with respect to the stator, and the rotor output fluid channel configured for fluid communication with at least a second of said stator fluid channels at a second relative angular position of the rotor with respect to the stator, the second relative angular position being different from the first relative angular position, wherein the output end (78) of the rotor input fluid channel (72) and the input end (80) of the rotor output fluid channel (74) are at an axial end face (79) of the rotor that bounds the variable volume pump chamber or is separated by a separating wall portion (83) from the variable volume pump chamber, **characterized in that** the pump system further comprises an electrical actuator (22) coupled to the rotor, and a position sensing system comprising a position detector (42) mounted in the stator and complementary sensor position markers (46) mounted in the rotor.

2. Pump system with rotary valve according to claim 1, wherein the stator has a conical or cylindrical valve bearing surface and the rotor has a complementary conical or cylindrical valve bearing surface.

3. Pump system with rotary valve according to claim 1, wherein rotor valve bearing surface and stator valve bearing surface form a thrust bearing and the rotor fluid channels comprise grooves on the rotor bearing surface (70).

4. Pump system with rotary valve according to any preceding claim, wherein the position detector (42) is mounted on a portion (18') of the stator coupled to, or forming part of, a housing or support structure (4), the stator portion (18') being removably assembled to the valve body (32).

5. Pump system with rotary valve according to any preceding claim, wherein the distinct and separate rotor input fluid channel (72) and rotor output fluid channel (74) extend to the pump chamber end face (79) of the rotor.

6. Pump system with rotary valve according to any preceding claim 1 to 4, wherein the end face (79) of the rotor is separated from the pump chamber by a stator wall portion (83).

7. Pump system with rotary valve according to the preceding claim, wherein the pump is a syringe pump or piston pump.

8. Pump system with rotary valve according to any preceding claim, wherein at least one stator fluid channel is at a different axial height to at least one other stator fluid channel.

9. Pump system with rotary valve according to any preceding claim, wherein the positions of the input and output ends of the various stator and rotor fluid channels are configured such that each rotor fluid channel is in communication with only one stator fluid channel over a 360° rotation of the rotor.

10. Pump system with rotary valve according to any preceding claim 1-7, wherein one or more of the fluid channels of the rotor are, over a 360° rotation of the rotor relative to the stator, in fluid communication with two or more stator fluid channels.

11. Pump system with rotary valve according to any preceding claim wherein the position detector (42) mounted in the stator and complementary sensor position markers (46) mounted in the rotor are configured to provide a plurality of discrete detectable positions spaced around the rotor at angular spacings that correspond to angular spacings between the ends of the stator fluid channels that are positioned at the stator valve bearing surface.

12. Pump system with rotary valve according to any preceding claim, wherein at least one of the sensor position markers is configured to provide a signal that is different from the signals produced by the other sensor position markers when detected by the detector to enable determining the absolute position of the rotor from at least one reference position.

13. Pump system with rotary valve according to the preceding claim, wherein the detector comprises a pair of magnetic field sensors mounted at slightly spaced apart positions configured to enable both the direction of rotation of the rotor as well as the relative angle of the rotor with respect to the stator to be detected accurately.

14. Pump system with rotary valve according to any preceding claim wherein the pump system is a microfluidic pump system configured to pump and dispense liquids in volumes ranging between 0.1 µL and 10000 µL per pump cycle, preferably between 1 and 1000 µL per pump cycle.

15. Pump system with rotary valve according to the preceding claim wherein the pump system is a microfluidic pump system configured for biological or chemical sample measurement or preparation.

16. Flow cytometer comprising a pump system with rotary valve according to any preceding claim, the flow cytometer optionally further comprising any of:
a microfluidic mixing device (3) connected to the rotary valve;
a sample analyzer (7, 9) connected to the microfluidic mixing device;
reagents and/or cleaning liquids provided in one or more replaceable cartridges connected to ports of the rotary valve.

## Patentansprüche

1. Pumpensystem mit Drehschieber (2), umfassend eine Pumpe (6) mit einer Pumpenkammer (28) mit variablem Volumen, die zwischen einer Saugphase und einer nachfolgenden Ausstoßphase Flüssigkeit speichern kann, und ein Ventil (8), wobei das Ventil einen Rotor (20) mit einem Rotorkörper (36) und zumindest einem Rotorfluidkanal (38) umfasst, einen Stator (18, 18'), der einen Statorkörper (32) und eine Mehrzahl von Statorfluidkanälen (34) umfasst, die mit Fluidanschlüssen (56) verbunden sind, die an dem Statorkörper montiert sind und mit jeweiligen Fluidzuführungs- (58) und -fördertrakten (60) gekoppelt sind, wobei die Fluidanschlüsse in Umfangsrichtung um den Rotor herum beabstandet angeordnet sind, der Statorkörper eine Ventillagerfläche (50) umfasst und der Rotorkörper (36) eine komplementäre Ventillagerfläche umfasst, die gleitend in die Statorventillagerfläche eingreift, wobei die Rotorfluidkanäle (38) zumindest einen Rotoreinlassfluidkanal (72) mit einem Einlassende (76) an der Lagerfläche (70) des Rotors und einem Auslassende (78) in Fluidverbindung mit der Pumpenkammer (28) umfassen, und zumindest einen Rotorauslassfluidkanal (74), der sich vom Rotoreintrittsfluidkanal unterscheidet und ein Einlassende (80) in Fluidverbindung mit der Pumpenkammer und ein Auslassende (82) an der Ventillagerfläche (70) des Rotorkörpers (36) aufweist, der Rotoreinlassfluidkanal, der für eine Fluidverbindung mit zumindest einem ersten der Statorfluidkanäle in einer ersten relativen Winkellage des Rotors in Bezug auf den Stator konfiguriert ist, und der Rotorauslassfluidkanal, der für eine Fluidverbindung mit zumindest einem zweiten der Statorfluidkanäle in einer zweiten relativen Winkellage des Rotors in Bezug auf den Stator konfiguriert ist, wobei die zweite relative Winkellage von der ersten relativen Winkellage verschieden ist, wobei das Auslassende (78) des Rotoreinlassfluidkanals (72) und das Einlassende (80) des Rotorauslassfluidkanals (74) an einer axialen Stirnfläche (79) des Rotors liegen, die die Pumpenkammer mit variablem Volumen begrenzt oder durch einen Trennwandabschnitt (83) von der Pumpenkammer mit variablem Volumen getrennt ist, **dadurch gekennzeichnet, dass** das Pumpensystem ferner ein mit dem Rotor gekoppeltes elektrisches Stellglied (22) und ein Positionserfassungssystem umfasst, das einen im Stator montierten Positionsmelder (42) und im Rotor montierte komplementäre Sensorpositionsmarkierungen (46) umfasst.

2. Pumpensystem mit Drehschieber nach Anspruch 1, wobei der Stator eine konische oder zylindrische Ventillagerfläche und der Rotor eine komplementäre konische oder zylindrische Ventillagerfläche aufweist.

3. Pumpensystem mit Drehschieber nach Anspruch 1, wobei die Rotorventillagerfläche und die Statorventillagerfläche ein Axiallager bilden und die Rotorfluidkanäle Nuten auf der Rotorlagerfläche (70) aufweisen.

4. Pumpensystem mit Drehschieber nach einem beliebigen der vorstehenden Ansprüche, wobei der Positionsmelder (42) an einem Abschnitt (18') des Stators montiert ist, der mit einem Gehäuse oder einer Tragstruktur (4) gekoppelt ist oder einen Teil davon bildet, wobei der Statorabschnitt (18') abnehmbar am Ventilkörper (32) montiert ist.

5. Pumpensystem mit Drehschieber nach einem beliebigen der vorstehenden Ansprüche, wobei sich der unterschiedliche und getrennte Rotoreinlasssfluidkanal (72) und Rotorauslasssfluidkanal (74) bis zur Pumpenkammerendfläche (79) des Rotors erstrecken.

6. Pumpensystem mit Drehschieber nach einem beliebigen der vorstehenden Ansprüche 1 bis 4, wobei die Stirnfläche (79) des Rotors durch einen Statorwandabschnitt (83) von der Pumpenkammer getrennt ist.

7. Pumpensystem mit Drehschieber nach einem beliebigen der vorstehenden Ansprüche, wobei die Pumpe eine Spritzenpumpe oder Kolbenpumpe ist.

8. Pumpensystem mit Drehschieber nach einem beliebigen der vorstehenden Ansprüche, wobei zumindest ein Statorfluidkanal auf einer anderen axialen Höhe als zumindest ein anderer Statorfluidkanal liegt.

9. Pumpensystem mit Drehschieber nach einem beliebigen der vorstehenden Ansprüche, wobei die Positionen der Ein- und Auslassenden der verschiedenen Stator- und Rotorfluidkanäle so konfiguriert sind, dass jeder Rotorfluidkanal mit nur einem Statorfluidkanal über eine 360°-Drehung des Rotors in Verbindung steht.

10. Pumpensystem mit Drehschieber nach einem beliebigen der vorstehenden Ansprüche 1 bis 7, wobei einer oder mehrere der Fluidkanäle des Rotors über eine 360°-Drehung des Rotors relativ zum Stator in Fluidverbindung mit zwei oder mehreren Statorfluidkanälen stehen.

11. Pumpensystem mit Drehschieber nach einem beliebigen der vorstehenden Ansprüche, wobei der im Stator montierte Positionsmelder (42) und komplementäre im Rotor montierte Sensorpositionsmarkierungen (46) so konfiguriert sind, dass sie eine Mehrzahl von diskreten erfassbaren Positionen bereitstellen, die um den Rotor herum in Winkelabständen angeordnet sind, die den Winkelabständen zwischen den Enden der Statorfluidkanäle entsprechen, die an der Lagerfläche des Statorventils positioniert sind.

12. Pumpensystem mit Drehschieber nach einem beliebigen der vorstehenden Ansprüche, wobei zumindest eine der Sensorpositionsmarkierungen so konfiguriert ist, dass sie ein Signal bereitstellt, das sich von den Signalen unterscheidet, die von den anderen Sensorpositionsmarkierungen erzeugt werden, wenn sie vom Melder erfasst werden, um das Bestimmen der absoluten Position des Rotors aus zumindest einer Bezugsposition zu ermöglichen.

13. Pumpensystem mit Drehschieber nach dem vorstehenden Anspruch, wobei der Melder ein Paar Magnetfeldsensoren umfasst, die an leicht beabstandeten Stellen montiert sind, die so konfiguriert sind, dass sowohl die Drehrichtung des Rotors als auch der relative Winkel des Rotors in Bezug auf den Stator genau erfasst werden können.

14. Pumpsystem mit Drehschieber nach einem beliebigen der vorstehenden Ansprüche, wobei das Pumpsystem ein mikrofluidisches Pumpsystem und so konfiguriert ist, dass es Flüssigkeiten in Volumen zwischen 0,1 µl und 10000 µl pro Pumpzyklus, vorzugsweise zwischen 1 und 1000 µl pro Pumpzyklus, pumpt und abgibt.

15. Pumpsystem mit Drehschieber nach dem vorstehenden Anspruch, wobei das Pumpsystem ein mikrofluidisches Pumpsystem ist, das für die biologische oder chemische Probenmessung oder -aufbereitung konfiguriert ist.

16. Durchflusszytometer, umfassend ein Pumpsystem mit Drehschieber nach einem beliebigen der vorstehenden Ansprüche, wobei das Durchflusszytometer optional weiterhin eines der folgenden umfasst:
eine mikrofluidische Mischvorrichtung (3), die mit dem Drehschieber verbunden ist;
einen Probenanalysator (7, 9), der mit der mikrofluidischen Mischvorrichtung verbunden ist;
Reagenzien und/oder Reinigungsflüssigkeiten, die in einer oder mehreren austauschbarer(en) Patrone(n) bereitgestellt werden, die mit den Anschlüssen des Drehschiebers verbunden sind.

## Revendications

1. Système de pompe à soupape rotative (2) comprenant une pompe (6) avec une chambre de pompe à volume variable (28) qui permet de stocker un liquide entre une phase d'aspiration et une phase d'expulsion suivante, et une soupape (8), la soupape comportant un rotor (20) comprenant un corps de rotor (36) et au moins un canal de fluide de rotor (38), un stator (18, 18') comprenant un corps de stator (32) et une pluralité de canaux de fluide de stator (34) raccordés à des orifices de fluide (56) montés sur le corps de stator couplés à des conduites d'alimentation (58) et de distribution (60) de fluide respectives, les orifices de fluide étant agencés de sorte à être espacés de manière circonférentielle autour du rotor, le corps de stator comprenant une surface de palier de soupape (50) et le corps de rotor (36) comprenant une surface de palier de soupape complémentaire mettant en prise de manière coulissante la surface de palier de soupape de stator, les canaux de fluide de rotor (38) comprennent au moins un canal de fluide d'entrée de rotor (72) ayant une extrémité d'entrée (76) sur ladite surface d'appui (70) du rotor et une extrémité de sortie (78) en communication fluidique avec la chambre de pompe (28), et au moins un canal de fluide de sortie de rotor (74) distinct du canal de fluide d'entrée de rotor et ayant une extrémité d'entrée (80) en communication fluidique avec ladite chambre de pompe et une extrémité de sortie (82) sur ladite surface de palier de soupape (70) du corps de rotor (36), le canal de fluide d'entrée de rotor étant configuré pour être mis en communication fluidique avec au moins un premier canal desdits canaux de fluide de stator à une première position angulaire relative du rotor par rapport au stator, et le canal de fluide de sortie de rotor étant configuré pour être mis en communication fluidique avec au moins un second canal desdits canaux de fluide de stator à une seconde position angulaire relative du rotor par rapport au stator, la seconde position angulaire relative étant différente de la première position angulaire relative, dans lequel l'extrémité de sortie (78) du canal de fluide d'entrée de rotor (72) et l'extrémité d'entrée (80) du canal de fluide de sortie de rotor (74) se trouvent sur une face d'extrémité axiale (79) du rotor qui limite la chambre de pompe à volume variable ou sont séparées par une portion de paroi de séparation (83) de la chambre de pompe à volume variable, **caractérisé en ce que** le système de pompe comprend en outre un actionneur électrique (22) couplé au rotor, et un système de détection de position comprenant un détecteur de position (42) monté dans le stator et des marqueurs de position de capteur complémentaires (46) montés dans le rotor.

2. Système de pompe à soupape rotative selon la revendication 1, dans lequel le stator a une surface de palier de soupape conique ou cylindrique et le rotor a une surface de palier de soupape conique ou cylindrique complémentaire.

3. Système de pompe à soupape rotative selon la revendication 1, dans lequel la surface de palier de soupape de rotor et la surface de palier de soupape de stator forment un palier de butée et les canaux de fluide de rotor comprennent des rainures sur la surface de palier de rotor (70) .

4. Système de pompe à soupape rotative selon l'une quelconque des revendications précédentes, dans lequel le détecteur de position (42) est monté sur une portion (18') du stator couplée à, ou faisant partie d'une structure de boîtier ou de support (4), la portion de stator (18') étant assemblée de manière amovible au corps de soupape (32).

5. Système de pompe à soupape rotative selon l'une quelconque des revendications précédentes, dans lequel le canal de fluide d'entrée de rotor (72) et le canal de fluide de sortie de rotor (74) distincts et séparés s'étendent jusqu'à la face d'extrémité de la chambre de pompe (79) du rotor.

6. Système de pompe à soupape rotative selon l'une quelconque des revendications précédentes 1 à 4, dans lequel la face d'extrémité (79) du rotor est séparée de la chambre de pompe par une portion de paroi de stator (83).

7. Système de pompe à soupape rotative selon la revendication précédente, dans lequel la pompe est une pompe à seringue ou une pompe à piston.

8. Système de pompe à soupape rotative selon l'une quelconque des revendications précédentes, dans lequel au moins un canal de fluide de stator se trouve à une hauteur axiale différente d'au moins un autre canal de fluide de stator.

9. Système de pompe à soupape rotative selon l'une quelconque des revendications précédentes, dans lequel les positions des extrémités d'entrée et de sortie des divers canaux de fluide de stator et de rotor sont configurées de sorte que chaque canal de fluide de rotor est en communication avec seulement un canal de fluide de stator sur une rotation à 360° du rotor.

10. Système de pompe à soupape rotative selon l'une quelconque des revendications précédentes 1 à 7, dans lequel un ou plusieurs des canaux de fluide du rotor sont, sur une rotation à 360° du rotor relativement au stator, en communication fluidique avec deux canaux de fluide de stator ou plus.

11. Système de pompe à soupape rotative selon l'une quelconque des revendications précédentes dans lequel le détecteur de position (42) monté dans le stator et des marqueurs de position de capteur complémentaire (46) montés dans le rotor sont configurés pour fournir une pluralité de positions discrètes détectables espacées autour du rotor à des espacements angulaires qui correspondent à des espacements angulaires entre les extrémités des canaux de fluide de stator qui sont positionnés sur la surface de palier de soupape de stator.

12. Système de pompe à soupape rotative selon l'une quelconque des revendications précédentes, dans lequel au moins l'un des marqueurs de position de capteur est configuré pour fournir un signal qui est différent des signaux produits par les autres marqueurs de position de capteur lorsqu'il est détecté par le détecteur pour permettre de déterminer la position absolue du rotor depuis au moins une position de référence.

13. Système de pompe à soupape rotative selon la revendication précédente, dans lequel le détecteur comprend une paire de capteurs de champ magnétique montés à des positions légèrement espacées, configurés pour permettre de détecter avec précision à la fois la direction de rotation du rotor et l'angle relatif du rotor par rapport au stator.

14. Système de pompe à soupape rotative selon l'une quelconque des revendications précédentes dans lequel le système de pompe est un système de pompe microfluidique configuré pour pomper et libérer des liquides dans des volumes compris entre 0,1 µL et 10000 µL par cycle de pompage, de préférence entre 1 et 1000 µL par cycle de pompage.

15. Système de pompe à soupape rotative selon la revendication précédente dans lequel le système de pompe est un système de pompe micro-fluidique configuré pour la mesure ou la préparation d'échantillon biologique ou chimique.

16. Cytomètre en flux comprenant un système de pompe à soupape rotative selon l'une quelconque des revendications précédentes, le cytomètre en flux comprenant en outre facultativement l'un quelconque parmi :
un dispositif de mélange microfluidique (3) raccordé à la soupape rotative ;
un analyseur d'échantillons (7, 9) raccordé au dispositif de mélange microfluidique ;
des réactifs et/ou des liquides de nettoyage prévus dans une ou plusieurs cartouche(s) remplaçable(s) raccordée(s) à des orifices de la soupape rotative.
